# EUROPÄISCHE PATENTSCHRIFT

(11) **EP 3 863 490 B1**
(45) Veröffentlichungstag und Bekanntmachung des Hinweises auf die Patenterteilung: **24.04.2024**
(21) Anmeldenummer: 19780224.2
(22) Anmeldetag: 30.09.2019
(51) Int. Cl.: A47L 15/42, A47L 15/48, A47L 15/00

(54) **HAUSHALTSGERÄT**
DOMESTIC APPLIANCE
APPAREIL MÉNAGER

(30) Priorität: 12.10.2018 DE 102018217549
(43) Veröffentlichungstag der Anmeldung: 18.08.2021
(73) Patentinhaber: BSH Hausgeräte GmbH, 81739 München (DE)
(72) Erfinder: SING, Alexander, 89426 Wittislingen (DE); RIEGER, Roland, 73492 Rainau (DE); REITER, Andreas, 89435 Finningen (DE)
(86) Internationale Anmeldenummer: PCT/EP2019/076371
(87) Internationale Veröffentlichungsnummer: WO 2020/074294

(56) Entgegenhaltungen:
- EP-A1- 3 092 935
- EP-A2- 0 195 923
- DE-A1- 4 110 292
- DE-A1- 4 227 957

## Beschreibung

Die vorliegende Erfindung betrifft ein Haushaltsgerät, insbesondere eine Haushaltsgeschirrspülmaschine.

Zur akustischen Isolation eines Spülbehälters einer Haushaltsgeschirrspülmaschine können auf den Spülbehälter Bitumenmatten aufgebracht werden. Die Bitumenmatten können beispielsweise mit Hilfe eines Schmelzklebers außenseitig auf den Spülbehälter aufgeklebt werden. Derartige Bitumenmatten haben ein hohes Wärmeaufnahmevermögen und leiten die aufgenommene Wärme von dem Spülbehälter weg. Wird der Anteil der mit den Bitumenmatten belegten Fläche des Spülbehälters reduziert, lässt sich die Energieaufnahme der Haushaltsgeschirrspülmaschine reduzieren. Diese Reduktion der belegten Fläche hat jedoch zur Folge, dass die Schallemission der Haushaltsgeschirrspülmaschine ansteigt.

Die Druckschrift EP 3 092 935 A1 offenbart eine Anordnung zur thermischen und akustischen Isolation eines Spülbehälters einer Haushaltsgeschirrspülmaschine. Die Anordnung umfasst ein erstes Isolationselement, welches dazu eingerichtet ist, den Spülbehälter thermisch zu isolieren, und ein zweites Isolationselement, welches dazu eingerichtet ist, den Spülbehälter akustisch zu isolieren. Dabei ist das erste Isolationselement zwischen dem Spülbehälter und dem zweiten Isolationselement angeordnet, wobei das erste Isolationselement direkt an den Spülbehälter angeschäumt ist. Dadurch, dass das erste Isolationselement direkt an den Aufnahmebereich angeschäumt ist, kann auf ein nachträgliches Anbringen der Anordnung an den Aufnahmebereich verzichtet werden. Hierdurch ist eine Kostenreduktion bei der Herstellung eines wasserführenden Haushaltsgeräts mit einer derartigen Anordnung erzielbar. Weiterhin kann hierdurch die Montagekomplexität reduziert werden, da ein zusätzlicher Arbeitsschritt des Isolierens des Aufnahmebereichs verzichtbar ist.

Die Trocknungsleistung einer wie zuvor erläuterten Haushaltsgeschirrspülmaschine mit thermisch isoliertem Spülbehälter kann hingegen mit Hilfe eines aktiven Trocknungssystems verbessert werden. Ein aktives Trocknungssystem kann einen Lüfter, einen Türöffner oder ein wasserabsorbierendes Material umfassen. Derartige aktive Trocknungssysteme sind beispielsweise in den Druckschriften DE 10 2011 004 945 A1, WO 2006/069837 A1 oder DE 103 53 774 A1 beschrieben. Beispielsweise reduziert ein Lüfter durch Luftaustausch die relative Luftfeuchtigkeit in dem Spülbehälter. Hierdurch kann das Spülgut wieder mehr Feuchtigkeit an die ausgetauschte trockene Luft abgeben. Ein wasserabsorbierendes Material, wie beispielsweise Zeolith oder dergleichen, reduziert die relative Luftfeuchtigkeit in dem Spülbehälter. Die trockene Luft kann dann wiederrum von dem nassen Spülgut abgegebene Feuchtigkeit aufnehmen.

Die Druckschrift DE 42 27 957 A1 offenbart ein Haushaltgerät, insbesondere eine geräusch- und/oder wärmeisolierte Geschirrspülmaschine oder Waschmaschine, deren Gehäusewandteil oder Spül- beziehungsweise Laugenbehälter zumindest teilweise mit Isoliermatten aus Bitumen, Kunststoff, Mineralfasern oder dergleichen belegt sind. Die Isoliermatten sind jeweils mit dem Spülbehälter oder dergleichen über einen ein- oder mehrschichtig ausgebildeten Zwischenträger verbunden, welcher in sich aufspaltbar beziehungsweise von dem Spülbehälter, den Gehäusewandteilen oder der Isoliermatte abziehbar ist. Der Zwischenträger kann mit dem Spülbehälter oder dergleichen und/oder mit der Isoliermatte verklebt sein beziehungsweise die Klebeverbindungen können selbst als Zwischenträger ausgebildet sein. Weiterhin kann als Klebeverbindung ein Schmelzkleber oder vorzugsweise ein abziehbarer Haftkleber verwendet sein. Ferner kann der ein- oder mehrlagige Zwischenträger aus Papier und/oder aus einer aufgetragenen Folie aus Kunststoff bestehen.

Die Druckschrift EP 0 195 923 A2 offenbart ein adhäsives, zerstörungsfrei entfernbares Isolationssystem zur Schallisolation von Trennwänden, insbesondere in Kraftfahrzeugen. Zur Bewirkung einer kraftschlüssigen Verbindung zwischen den nachgeschalteten Schichten des Isolationssystems und dem Untergrund liegt eine aus einem stark untervernetzten Polyurethan vorgefertigte oder durch Aufspritzen einer stark untervernetzten 2-Komponenten Mischung hergestellte Materialschicht vor.

Die Druckschrift DE 41 10 292 A1 offenbart ein Haushaltgerät, wie eine Geschirrspülmaschine, einen Kühlschrank oder eine Gefriertruhe, mit einem Gehäuse, wobei in dem Zwischenraum zwischen dem Außengehäusemantel und dem innenliegenden Spülbehälter beziehungsweise dem Kühlraum eine Auskleidung aus Kunststoffschaum eingeschäumt ist und wobei die zwischen dem Außengehäusemantel und dem innenliegenden Spülbehälter oder Kühlraum angeordnete Auskleidung als ein separat entfernbarer ein- oder mehrteiliger Formkörper ausgebildet ist, welcher zumindest mit dem Spülbehälter beziehungsweise dem Kühlraum in formschlüssiger Verbindung steht. Der Kunststoffschaum kann in einen oder in mehrere flexible Folienbeutel eingeschäumt sein, die zwischen dem Außengehäusemantel und dem Spülbehälter beziehungsweise dem Kühlraum angeordnet den ein- oder mehrteiligen separaten Formkörper bilden, welcher den Konturen des Zwischenraums folgt. Ferner können die den Zwischenraum begrenzenden Wandteile des Außengehäusemantels und/oder des Spülbehälters beziehungsweise des Kühlraums mit einem Trennmittel für den Kunststoffschaum versehen sein. Weiterhin können als Trennmittel für den Kunststoffschaum separate Kunststoff-Folien vorgesehen sein. Auch kann der Formkörper aus einem nichthaftenden Kunststoffschaum bestehen.

Vor diesem Hintergrund besteht eine Aufgabe der vorliegenden Erfindung darin, ein verbessertes Haushaltsgerät, insbesondere eine verbesserte Haushaltsgeschirrspülmaschine, zur Verfügung zu stellen.

Demgemäß wird ein Haushaltsgerät, insbesondere Haushaltsgeschirrspülmaschine, mit einem Funktionsbehälter, insbesondere Spülbehälter, einer außenseitig an dem Funktionsbehälter, insbesondere Spülbehälter, vorgesehenen Isolationsanordnung zur thermischen und akustischen Isolation des Funktionsbehälters, insbesondere Spülbehälters, und mit einem aktiven Trocknungssystem zur aktiven Trocknung von in dem Funktionsbehälter, insbesondere Spülbehälter, aufgenommenen Gut, insbesondere Spülgut, vorgeschlagen, wobei die Isolationsanordnung zur thermischen und akustischen Isolation des Funktionsbehälters, insbesondere Spülbehälters ein erste Isolationselement zur thermischen Isolation des Funktionsbehälters, insbesondere Spülbehälters, aufweist, wobei das erste Isolationselement zur thermischen Isolation des Funktionsbehälters, insbesondere Spülbehälters, materialeinstückig aus einem Kunststoffmaterial gefertigt ist, welches in einem ausgehärteten und/oder vernetzten Zustand adhäsive Eigenschaften aufweist, so dass das erste Isolationselement zur thermischen Isolation des Funktionsbehälters, insbesondere Spülbehälters, mit einer dem Funktionsbehälter, insbesondere Spülbehälter, zugewandten Oberfläche an dem Funktionsbehälter, insbesondere Spülbehälter, anhaftet, wobei die Isolationsanordnung ein zweites Isolationselement zur akustischen Isolation des Funktionsbehälters,

insbesondere Spülbehälters, aufweist, wobei das erste Isolationselement zur thermischen Isolation des Funktionsbehälters, insbesondere Spülbehälters, zwischen dem Funktionsbehälter, insbesondere Spülbehälter, und dem zweiten Isolationselement zur akustischen Isolation des Funktionsbehälters, insbesondere Spülbehälters, angeordnet ist und wobei das erste Isolationselement zur thermischen Isolation des Funktionsbehälters, insbesondere Spülbehälters, eine Wärmeübertragung von dem Funktionsbehälter, insbesondere Spülbehälter, auf das zweite Isolationselement zur akustischen Isolation des Funktionsbehälters, insbesondere Spülbehälters, verhindert. Das erste mit der dem Funktionsbehälter, insbesondere Spülbehälter, zugewandten Oberfläche an dem Funktionsbehälter, insbesondere Spülbehälter, haftende Isolationselement zur thermischen Isolation des Funktionsbehälters, insbesondere Spülbehälters, ist zerstörungsfrei von dem Funktionsbehälter, insbesondere Spülbehälter, trennbar. Ferner ist das erste Isolationselement zur thermischen Isolation des Funktionsbehälters, insbesondere Spülbehälters, klebstofffrei an dem Funktionsbehälter, insbesondere Spülbehälter, befestigt und kann auch rückstandsfrei wieder von dem Funktionsbehälter, insbesondere Spülbehälter, entfernt werden.

Mit Hilfe des aktiven Trocknungssystems kann auch bei einer guten thermischen Isolation des Funktionsbehälters, insbesondere Spülbehälters, mit Hilfe des ersten Isolationselements zur thermischen Isolation des Funktionsbehälters, insbesondere Spülbehälters, stets eine zufriedenstellende Trocknung des Guts, insbesondere Spülguts, sichergestellt werden.

Unter einem "aktiven Trocknungssystem" ist vorliegend ein Trocknungssystem zu verstehen, welches entweder in dem Funktionsbehälter, insbesondere Spülbehälter, aktiv eine Luftumwälzung oder einen Luftaustausch erzeugt und/oder aktiv, beispielsweise mit Hilfe eines wasserabsorbierenden Materials, dem Funktionsbehälter, insbesondere Spülbehälter, von dem Gut, insbesondere Spülgut, abgegebene Feuchtigkeit entzieht. Im Gegensatz hierzu sind passive Trocknungssysteme zu sehen. Bei einem passiven Trocknungssystem erzeugen beispielsweise die Seitenwände des Funktionsbehälters, insbesondere Spülbehälters, welche nicht aktiv gekühlt werden, durch ihren Energieaustausch mit der Umgebung ein Temperaturgefälle innerhalb des Funktionsbehälters, insbesondere Spülbehälters. Dieses kann nur durch einen Energieverlust an ein oder mehreren Seitenwänden geschaffen werden. Sind diese aber gegenüber der Umgebung thermisch isoliert, reicht das Temperaturgefälle nicht aus, um ein zufriedenstellendes Trocknungsergebnis sicherzustellen. Unter einem "passiven Trocknungssystem" ist somit insbesondere ein Trocknungssystem zu verstehen, welches ohne eine erzwungene Luftumwälzung oder einen erzwungenen Luftaustausch arbeitet und welches dem Funktionsraum, insbesondere Spülraum, auch aktiv keine Feuchtigkeit und/oder Wärme entzieht.

Vorzugsweise ist das erste Isolationselement zur thermischen Isolation des Funktionsbehälters, insbesondere Spülbehälters, durchgehend aus dem Kunststoffmaterial gefertigt. "Materialeinstückig" heißt hierbei, dass das erste Isolationselement zur thermischen Isolation des Funktionsbehälters, insbesondere Spülbehälters, nur einen Werkstoff aufweist, nämlich das zuvor erwähnte Kunststoffmaterial. Der Funktionsbehälter, insbesondere Spülbehälter, ist insbesondere quaderförmig und umfasst einen Boden, eine Rückwand, eine Decke, zwei einander gegenüberliegende Seitenwände und eine Tür. Die Isolationsanordnung kann dabei jeweils an der Rückwand, der Decke, den Seitenwänden und/oder an der Tür vorgesehen sein. Die Isolationsanordnung kann ferner auch an dem Boden vorgesehen sein. Der Funktionsbehälter, insbesondere Spülbehälter, und die Tür umschließen einen Funktionsraum, insbesondere Spülraum, des Haushaltsgeräts, insbesondere der Haushaltsgeschirrspülmaschine. In dem Funktionsraum, insbesondere Spülraum, ist das Gut, insbesondere Spülgut, aufgenommen.

"Außenseitig" bedeutet dabei, dem Funktionsraum, insbesondere Spülraum, abgewandt. Beispielsweise weisen die Rückwand, der Boden, die Decke, die Seitenwände und/oder die Tür jeweils eine dem Funktionsraum, insbesondere Spülraum, zugewandte Innenseite und eine dem Funktionsraum, insbesondere Spülraum, abgewandte Außenseite auf. An der jeweiligen Außenseite ist die Isolationsanordnung vorgesehen. Darunter, dass das erste Isolationselement zur thermischen Isolation des Funktionsbehälters, insbesondere Spülbehälters, "zerstörungsfrei" von dem Funktionsbehälter, insbesondere Spülbehälter, trennbar ist, ist zu verstehen, dass das erste Isolationselement zur thermischen Isolation des Funktionsbehälters, insbesondere Spülbehälters, von dem Funktionsbehälter, insbesondere Spülbehälter, abgezogen oder entfernt werden kann, ohne dass Rückstände des ersten Isolationselements zur thermischen Isolation des Funktionsbehälters, insbesondere Spülbehälters, an dem Funktionsbehälter,

insbesondere Spülbehälter, haften bleiben. Es können dabei jedoch auch geringfügige Rückstände an dem Funktionsbehälter, insbesondere Spülbehälter, verbleiben. Das heißt, das erste Isolationselement zur thermischen Isolation des Funktionsbehälters, insbesondere Spülbehälters, lässt sich leicht von dem Funktionsbehälter, insbesondere Spülbehälter, ablösen, es können jedoch Rückstände an dem Funktionsbehälter, insbesondere Spülbehälter, verbleiben. Diese lassen sich durch Reiben entfernen. Insbesondere kann das erste Isolationselement zur thermischen Isolation des Funktionsbehälters, insbesondere Spülbehälters, ohne Hilfsmittel, wie zum Beispiel Lösungsmittel, von dem Funktionsbehälter, insbesondere Spülbehälter, getrennt werden. Die Verbindung zwischen dem ersten Isolationselement zur thermischen Isolation des Funktionsbehälters, insbesondere Spülbehälters, und dem Funktionsbehälter, insbesondere Spülbehälter, kann eine schwach haftende Klebeverbindung sein.

Das Kunststoffmaterial kann mehrere Komponenten aufweisen, welche zum Herstellen des ersten Isolationselements zur thermischen Isolation des Funktionsbehälters, insbesondere Spülbehälters, vermischt werden und chemisch miteinander derart reagieren, dass das Kunststoffmaterial vollständig aushärtet und/oder vernetzt. Das Kunststoffmaterial selbst weist die adhäsiven oder klebenden Eigenschaften auf. Unter "Adhäsion" ist vorliegend die Eigenschaft des Kunststoffmaterials zu verstehen, dass die dem Funktionsbehälter, insbesondere Spülbehälter, zugewandte Oberfläche des ersten Isolationselements zur thermischen Isolation des Funktionsbehälters, insbesondere Spülbehälters, mit einer Außenseite des Spülbehälters derart in Wechselwirkung tritt, dass das erste Isolationselement zur thermischen Isolation des Funktionsbehälters, insbesondere Spülbehälters, an dem Funktionsbehälter, insbesondere Spülbehälter, haftet. Die Adhäsion kann dabei auf molekularen Wechselwirkungen zwischen dem Kunststoffmaterial und dem Material des Funktionsbehälters, insbesondere Spülbehälters, beruhen. Weiterhin kann die Adhäsion auch auf physikalisch-mechanischen Kräften beruhen. Beispielsweise kann sich das Kunststoffmaterial in mikroskopisch kleinen Poren und/oder Vertiefungen des Funktionsbehälters, insbesondere Spülbehälters, verklammern oder verhaken. Insbesondere ist das erste Isolationselement zur thermischen Isolation des Funktionsbehälters, insbesondere Spülbehälters, klebstofffrei mit dem Funktionsbehälter, insbesondere Spülbehälter, verbunden. Wie zuvor ausgeführt, umfasst das Kunststoffmaterial des ersten Isolationselements zur thermischen Isolation des Funktionsbehälters, insbesondere Spülbehälters, selbst adhäsive oder klebende Eigenschaften. Hierdurch kann auf einen Klebstoff zum Verbinden des ersten Isolationselements zur thermischen Isolation des Funktionsbehälters, insbesondere Spülbehälters, mit dem Funktionsbehälter, insbesondere Spülbehälter, verzichtet werden. Dies vereinfacht die Herstellung des Haushaltsgeräts, insbesondere der Haushaltsgeschirrspülmaschine, und ermöglicht eine verbesserte Wiederverwertung der verwendeten Materialien.

Gemäß einer ersten Ausführungsform ist das Kunststoffmaterial ein Polyurethan, insbesondere ein aufgeschäumtes Polyurethan.

Das Polyurethan weist vorzugsweise eine offenporige Struktur auf. Das Kunststoffmaterial ist somit kompressibel, so dass bei Kompression Luft aus dem Kunststoffmaterial entweichen kann. Es können auch andere geeignete Kunststoffmaterialien eingesetzt werden.

Gemäß einer zweiten Ausführungsform weist das Kunststoffmaterial viskoelastische Eigenschaften auf.

Als "Viskoelastizität" wird ein teilweise elastisches, teilweise viskoses Materialverhalten bezeichnet. Viskoelastische Stoffe vereinigen somit Merkmale von Festkörpern und Flüssigkeiten in sich.

Dadurch, dass das erste Isolationselement zur thermischen Isolation des Funktionsbehälters, insbesondere Spülbehälters, zwischen dem Funktionsbehälter, insbesondere Spülbehälter, und dem zweiten Isolationselement zur akustischen Isolation des Funktionsbehälters, insbesondere Spülbehälters, angeordnet ist, kann das zweite Isolationselement zur akustischen Isolation des Funktionsbehälters, insbesondere Spülbehälters, dem Spülbehälter keine Wärme entziehen. Dies verbessert die Energieeffizienz des Haushaltsgeräts, insbesondere der Haushaltsgeschirrspülmaschine. Das zweite Isolationselement zur akustischen Isolation des Funktionsbehälters, insbesondere Spülbehälters, ist vorzugweise dazu eingerichtet, Schwingungen in Wärme umzuwandeln. Auch das erste Isolationselement zur thermischen Isolation des Funktionsbehälters, insbesondere Spülbehälters, kann dazu geeignet sein, Schwingungen in Wärme umzuwandeln. Das zweite Isolationselement zur akustischen Isolation des Funktionsbehälters, insbesondere Spülbehälters, dient insbesondere als Masseschicht. Das zweite Isolationselement zur akustischen Isolation des Funktionsbehälters, insbesondere Spülbehälters, verbessert die akustischen Eigenschaften der Isolationsanordnung.

Gemäß einer weiteren Ausführungsform weist das Haushaltsgerät, insbesondere die Haushaltsgeschirrspülmaschine, einen Energieverbrauch von kleiner als 1,2 kWh/Betriebszyklus, bevorzugt von kleiner als 1,0 kWh/Betriebszyklus, weiter bevorzugt von kleiner als 0,8 kWh/Betriebszyklus, weiter bevorzugt von kleiner als 0,7 kWh/Betriebszyklus, weiter bevorzugt von kleiner als 0,6 kWh/Betriebszyklus, auf.

Ein Energieverbrauch von kleiner als 0,8 kWh/Betriebszyklus ist insbesondere bei einem aktiven Trocknungssystem zu erreichen, welches ein wasserabsorbierendes Material verwendet. Energieverbräuche von kleiner als 0,7 kWh/Betriebszyklus sind insbesondere bei der Kombination verschiedener aktiver Trocknungssysteme erzielbar.

Gemäß einer weiteren Ausführungsform weist das aktive Trocknungssystem ein wasserabsorbierendes Material, insbesondere Zeolith, zum Absorbieren von Feuchtigkeit in dem Funktionsbehälter, insbesondere Spülbehälters, einen Lüfter zum Belüften des Funktionsbehälters, insbesondere Spülbehälters, und/oder einen Türöffner zum Öffnen einer Tür des Funktionsbehälters, insbesondere Spülbehälters, auf.

Das aktive Trocknungssystem kann beispielsweise einen Lüfter, ein Heizelement und eine Sorptionskolonne aufweisen, in der das wasserabsorbierende Material aufgenommen ist. Das aktive Trocknungssystem kann auch ein Abluft-Trocknungssystem sein. In diesem Fall umfasst das aktive Trocknungssystem einen Lüfter, welcher dazu eingerichtet ist, feuchte Luft aus dem Funktionsbehälter, insbesondere Spülbehälter, abzuführen und kalte trockene Umgebungsluft wieder anzusaugen. Der Türöffner ist dazu eingerichtet, die Tür des Funktionsbehälters, insbesondere Spülbehälters, spaltweise zu öffnen, so dass mit Feuchtigkeit beladene Luft aus dem Funktionsbehälter, insbesondere Spülbehälter, entweichen kann. Kalte trockene Luft strömt dann in den Funktionsbehälter, insbesondere Spülbehälter, hinein und entnimmt dem Funktionsbehälter, insbesondere Spülbehälter, Feuchtigkeit. Das Trocknungssystem kann auch eine aktiv gekühlte Kondensationsfläche, einen Wärmetauscher oder Wärmetauscherrohre umfassen.

Gemäß einer weiteren Ausführungsform weist das zweite Isolationselement zur akustischen Isolation des Funktionsbehälters, insbesondere Spülbehälters, eine höhere Dichte als das erste Isolationselement zur thermischen Isolation des Funktionsbehälters, insbesondere Spülbehälters, auf.

Das erste Isolationselement zur thermischen Isolation des Funktionsbehälters, insbesondere Spülbehälters, weist vorzugsweise eine Massendichte oder Dichte zwischen 5 und 150 kg/m³, bevorzugt zwischen 50 und 120 kg/m³, weiter bevorzugt zwischen 70 und 100 kg/m³ auf. Die Massendichte oder Dichte des zweiten Isolationselements zur akustischen Isolation des Funktionsbehälters, insbesondere Spülbehälters, ist vorzugsweise größer als 1.000 kg/m³.

Gemäß einer weiteren Ausführungsform ist das zweite Isolationselement zur akustischen Isolation des Funktionsbehälters, insbesondere Spülbehälters, aus einem Bitumenmaterial, insbesondere aus einem metall- und/oder gesteinsgefüllten Bitumenmaterial, oder aus einem Kunststoffmaterial, insbesondere aus einem metall- und/oder gesteinsgefüllten Kunststoffmaterial, gefertigt.

Das Bitumenmaterial oder das Kunststoffmaterial kann fein verteiltes Metallpulver oder Gesteinsmehl aufweisen. Das zweite Isolationselement zur akustischen Isolation des Funktionsbehälters, insbesondere Spülbehälters, ist vorzugsweise platten- oder mattenförmig. Beispielsweise kann das zweite Isolationselement zur akustischen Isolation des Funktionsbehälters, insbesondere Spülbehälters, auch aus einem Butylmaterial gefertigt sein. Alternativ kann das zweite Isolationselement zur akustischen Isolation des Funktionsbehälters, insbesondere Spülbehälters, eine Metallplatte, insbesondere eine Stahlplatte, sein.

Gemäß einer weiteren Ausführungsform ist zwischen dem ersten Isolationselement zur thermischen Isolation des Funktionsbehälters, insbesondere Spülbehälters, und dem zweiten Isolationselement zur akustischen Isolation des Funktionsbehälters, insbesondere Spülbehälters, eine Trennschicht angeordnet, um das erste Isolationselement zur thermischen Isolation des Funktionsbehälters, insbesondere Spülbehälters, zerstörungsfrei von dem zweiten Isolationselement zur akustischen Isolation des Funktionsbehälters, insbesondere Spülbehälters, zu trennen.

Hierdurch ist eine Wiederverwertung des ersten Isolationselements zur thermischen Isolation des Funktionsbehälters, insbesondere Spülbehälters, und des zweiten Isolationselements zur akustischen Isolation des Funktionsbehälters, insbesondere Spülbehälters, nach Beendigung der Lebensdauer des Haushaltsgeräts, insbesondere der Haushaltsgeschirrspülmaschine, möglich. Das erste Isolationselement zur thermischen Isolation des Funktionsbehälters, insbesondere Spülbehälters, und das zweite Isolationselement zur akustischen Isolation des Funktionsbehälters, insbesondere Spülbehälters, können rückstandsfrei voneinander getrennt werden.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigen
- Fig. 1: eine schematische perspektivische Ansicht einer Ausführungsform eines Haushaltsgeräts in Ausgestaltung einer Haushaltsgeschirrspülmaschine;
- Fig. 2: eine schematische Schnittansicht der Haushaltsgeschirrspülmaschine gemäß Fig. 1;
- Fig. 3: eine schematische Schnittansicht einer weiteren Ausführungsform einer Haushaltsgeschirrspülmaschine;
- Fig. 4: eine schematische Schnittansicht einer weiteren Ausführungsform einer Haushaltsgeschirrspülmaschine;
- Fig. 5: eine schematische Schnittansicht einer weiteren Ausführungsform einer Haushaltsgeschirrspülmaschine;
- Fig. 6: eine schematische Teilschnittansicht einer Ausführungsform eines Spülbehälters für die Haushaltsgeschirrspülmaschine gemäß den Fig. 1 bis 5 in einer Explosionsansicht; und
- Fig. 7: eine weitere schematische Teilschnittansicht des Spülbehälters gemäß Fig. 6.

In den Figuren sind gleiche oder funktionsgleiche Elemente mit denselben Bezugszeichen versehen worden, sofern nichts anderes angegeben ist.

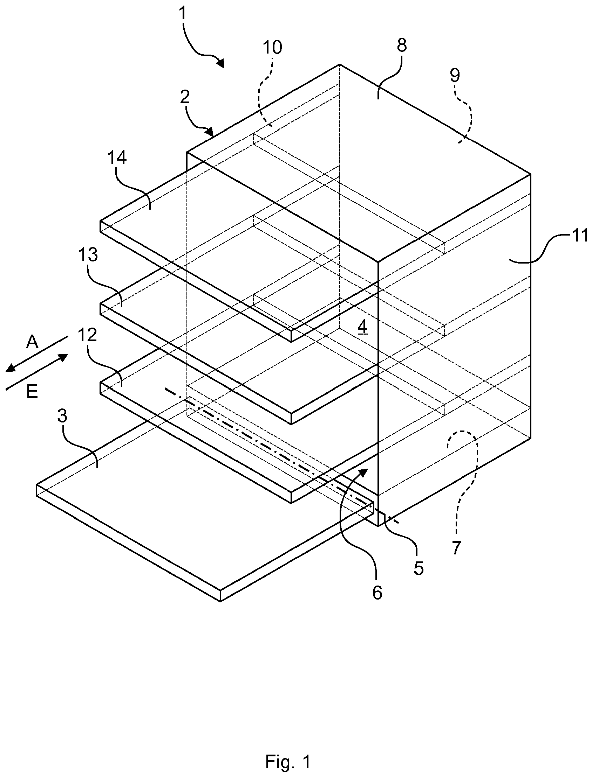

Die Fig. 1 zeigt eine schematische perspektivische Ansicht einer Ausführungsform eines Haushaltsgeräts 1 in Ausgestaltung einer Haushaltsgeschirrspülmaschine. Die Haushaltsgeschirrspülmaschine 1 umfasst einen Funktionsbehälter in Ausgestaltung eines Spülbehälters 2, welcher durch eine Tür 3, insbesondere wasserdicht, verschließbar ist. Hierzu kann zwischen der Tür 3 und dem Spülbehälter 2 eine Dichteinrichtung vorgesehen sein. Der Spülbehälter 2 ist vorzugweise quaderförmig. Der Spülbehälter 2 kann in einem Gehäuse der Haushaltsgeschirrspülmaschine 1 angeordnet sein. Der Spülbehälter 2 und die Tür 3 können einen Spülraum 4 zum Spülen von Spülgut bilden.

Die Tür 3 ist in der Fig. 1 in ihrer geöffneten Stellung dargestellt. Durch ein Schwenken um eine an einem unteren Ende der Tür 3 vorgesehene Schwenkachse 5 kann die Tür 3 geschlossen oder geöffnet werden. Mit Hilfe der Tür 3 kann eine Beschickungsöffnung 6 des Spülbehälters 2 geschlossen oder geöffnet werden. Der Spülbehälter 2 weist einen Boden 7, eine dem Boden 7 gegenüberliegend angeordnete Decke 8, eine der geschlossenen Tür 3 gegenüberliegend angeordnete Rückwand 9 und zwei einander gegenüberliegend angeordnete Seitenwände 10, 11 auf. Der Boden 7, die Decke 8, die Rückwand 9 und die Seitenwände 10, 11 können beispielsweise aus einem Edelstahlblech gefertigt sein. Alternativ kann beispielsweise der Boden 7 aus einem Kunststoffmaterial gefertigt sein.

Die Haushaltsgeschirrspülmaschine 1 weist ferner zumindest eine Spülgutaufnahme 12 bis 14 auf. Vorzugsweise können mehrere, beispielsweise drei, Spülgutaufnahmen 12 bis 14 vorgesehen sein, wobei die Spülgutaufnahme 12 eine untere Spülgutaufnahme oder ein Unterkorb, die Spülgutaufnahme 13 eine obere Spülgutaufnahme oder ein Oberkorb und die Spülgutaufnahme 14 eine Besteckschublade sein kann. Wie die Fig. 1 weiterhin zeigt, sind die Spülgutaufnahmen 12 bis 14 übereinander in dem Spülbehälter 2 angeordnet. Jede Spülgutaufnahme 12 bis 14 ist wahlweise in den Spülbehälter 2 hinein- oder aus diesem herausverlagerbar. Insbesondere ist jede Spülgutaufnahme 12 bis 14 in einer Einschubrichtung E (Pfeil) in den Spülbehälter 2 hineinschiebbar oder hineinfahrbar und entgegen der Einschubrichtung E (Pfeil) in einer Auszugsrichtung A (Pfeil) aus dem Spülbehälter 2 herausziehbar oder herausfahrbar.

Das erfindungsgemäße Haushaltsgerät 1 kann in allgemeiner Weise eine Haushaltsgeschirrspülmaschine, eine Haushaltswaschmaschine oder ein Haushaltswäschetrockner sein. Je nach Haushaltsgerätetyp kann der Funktionsbehälter ein Spülbehälter, ein Laugenbehälter beziehungsweise eine Wäschetrommel sein. Eine derartige Haushaltswaschmaschine ist beispielsweise aus der Druckschrift EP 2 049 723 A1 bekannt, wohingegen ein derartiger Haushaltswäschetrockner aus der Druckschrift DE 33 45 303 A1 bekannt ist. Der diesbezügliche Inhalt dieser beispielhaft genannten Druckschriften wird hiermit zum Gegenstand der vorliegenden Beschreibung gemacht.

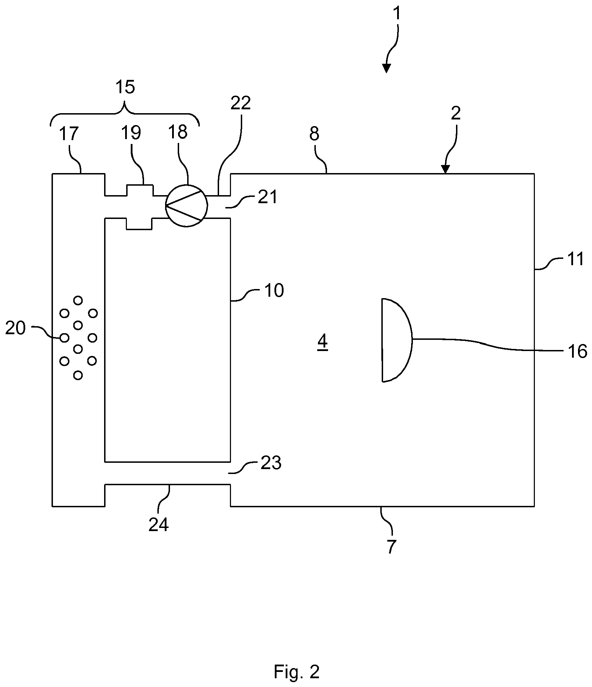

Die Fig. 2 zeigt eine schematische Schnittansicht der Haushaltsgeschirrspülmaschine 1. Die Haushaltsgeschirrspülmaschine 1 umfasst ein aktives Trocknungssystem 15 zur aktiven Trocknung von in dem Spülbehälter 2 aufgenommenem Spülgut 16. Das Spülgut 16 kann beispielsweise Geschirr, Besteck, Kochtöpfe, Pfannen oder dergleichen umfassen. Das Spülgut 16 ist in dem Spülraum 4 aufgenommen. Das Spülgut 16 kann in einer der Spülgutaufnahmen 12 bis 14 aufgenommen sein, welche in der Fig. 2 nicht gezeigt sind.

Das aktive Trocknungssystem 15 umfasst eine Sorptionskolonne 17, einen Lüfter 18 sowie ein Heizelement 19. Die Sorptionskolonne 17 enthält als Trocknungsmittel ein wasserabsorbierendes Material 20, beispielsweise Zeolith. Das wasserabsorbierende Material 20 ist insbesondere reversibel dehydrierbar. Das heißt, das wasserabsorbierende Material 20 kann aufgenommene Feuchtigkeit bei Hitzeeinwirkung wieder abgeben. Das wasserabsorbierende Material 20 kann beispielsweise in Granulatform vorliegen und in der Sorptionskolonne 17 aufgenommen sein.

Der Spülbehälter 2 umfasst an einem oberen Bereich der Seitenwand 10 eine Auslassöffnung 21, welche über eine Leitung 22 mit dem aktiven Trocknungssystem 15 verbunden ist. Dabei sind der Lüfter 18 und das Heizelement 19 in oder an der Leitung 22 angeordnet. Der Lüfter 18 ist stromabwärts der Auslassöffnung 21, das Heizelement 19 ist stromabwärts des Lüfters 18 und die Sorptionskolonne 17 ist stromabwärts des Heizelements 19 positioniert. Weiterhin umfasst die Seitenwand 10 eine Einlassöffnung 23, welche über eine weitere Leitung 24 mit dem aktiven Trocknungssystem 15, insbesondere mit der Sorptionskolonne 17, in Fluidverbindung ist. Der Spülraum 4 ist somit mit Hilfe der Leitungen 22, 24 mit dem aktiven Trocknungssystem 15 in Fluidverbindung.

In einem Trocknungsschritt wird mit Hilfe des Lüfters 18 Luft mit hoher Luftfeuchtigkeit aus dem Spülbehälter 2 abgesaugt und durch die Sorptionskolonne 17 geleitet. Das in der Sorptionskolonne 17 aufgenommene wasserabsorbierende Material 20 absorbiert die Luftfeuchtigkeit. Die so getrocknete Luft wird dann im Kreislauf über die Leitung 24 dem Spülbehälter 2 wieder zugeführt. Die getrocknete Luft kann dann wieder Feuchtigkeit in dem Spülraum 4 aufnehmen und der Sorptionskolonne 17 zuführen. Somit wird das Spülgut 16 getrocknet.

Die in dem wasserabsorbierenden Material 20 gespeicherte Wassermenge kann in einem Regenerationsvorgang, das heißt bei einer Desorption, durch Aufheizen des wasserabsorbierenden Materials 20 in der Sorptionskolonne 17 wieder freigegeben werden. Hierzu wird mit Hilfe des Lüfters 18 Luft durch die Sorptionskolonne 17 geleitet, welche von dem Heizelement 19 auf sehr hohe Temperaturen erhitzt worden ist. Dadurch tritt das in dem wasserabsorbierenden Material 20 gespeicherte Wasser als heißer Wasserdampf aus und wird in den Spülbehälter 2 zurückgeführt.

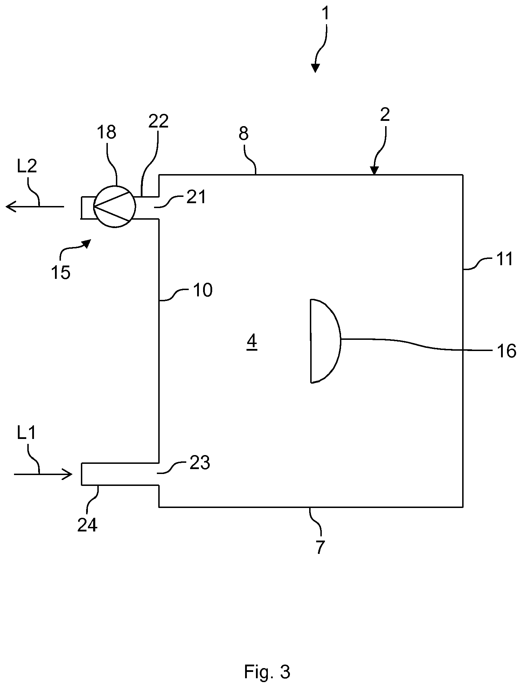

Die Fig. 3 zeigt eine schematische Schnittansicht einer weiteren Ausführungsform einer Haushaltsgeschirrspülmaschine 1. Die Haushaltsgeschirrspülmaschine 1 gemäß der Fig. 3 unterscheidet sich von der Haushaltsgeschirrspülmaschine 1 gemäß den Fig. 1 und 2 durch eine alternative Ausgestaltung des aktiven Trocknungssystems 15. Bei dieser Ausführungsform des aktiven Trocknungssystems 15 ist dieses als Abluft-Trocknungssystem ausgebildet.

Das aktive Trocknungssystem 15 umfasst einen wie zuvor erläuterten Lüfter 18, eine an die Auslassöffnung 21 des Spülbehälters 2 angeschlossene Leitung 22 sowie eine an die Einlassöffnung 23 des Spülbehälters 2 angeschlossene Leitung 24. In einem Trocknungsschritt wird mit Hilfe des Lüfters 18 trockene kühle Umgebungsluft L1 (Pfeil) in den Spülbehälter 2 eingesaugt. Die kühle Umgebungsluft L1 (Pfeil) erwärmt sich an dem erwärmten Spülgut 16. Die von dem Spülgut 16 erwärmte Umgebungsluft L1 (Pfeil) nimmt Wasser von dem Spülgut 16 auf, und die mit dem Wasser beladene Umgebungsluft L1 (Pfeil) wird mit Hilfe des Lüfters 18 als Abluft L2 (Pfeil) aus dem Spülbehälter 2 hinausgeblasen.

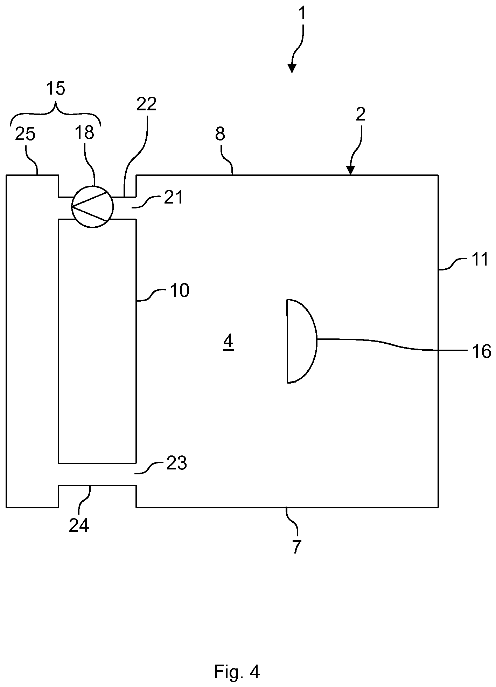

Die Fig. 4 zeigt eine schematische Schnittansicht einer weiteren Ausführungsform einer Haushaltsgeschirrspülmaschine 1. Die Haushaltsgeschirrspülmaschine 1 gemäß der Fig. 4 unterscheidet sich von der Haushaltsgeschirrspülmaschine 1 gemäß der Fig. 3 nur dadurch, dass das aktive Trocknungssystem 15 bei der Haushaltsgeschirrspülmaschine 1 gemäß der Fig. 4 als Umluft-Trocknungssystem und nicht als Abluft-Trocknungssystem ausgebildet ist.

Das aktive Trocknungssystem 15 umfasst hierzu neben dem zuvor erwähnten Lüfter 18 einen externen Kondensationsbehälter 25. Der Kondensationsbehälter 25 ist mit Hilfe der Leitungen 22, 24 mit dem Spülbehälter 2 in Fluidverbindung. Mit Hilfe des Lüfters 18 wird die feuchte Luft aus dem Spülbehälter 2 in den Kondensationsbehälter 25 geblasen. Dort kühlt sich die Luft ab, gibt die Feuchtigkeit an den Kondensationsbehälter 25 ab und wird wieder in den Spülbehälter 2 geleitet. Die abgekühlte Luft erwärmt sich dort an dem warmen Spülgut 16 und nimmt Feuchtigkeit von dem Spülgut 16 auf.

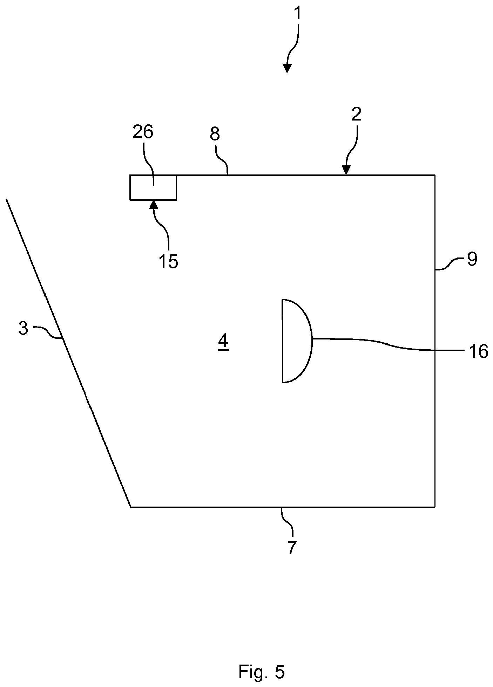

Die Fig. 5 zeigt eine schematische Schnittansicht einer weiteren Ausführungsform einer Haushaltsgeschirrspülmaschine 1. Die Haushaltsgeschirrspülmaschine 1 gemäß der Fig. 5 unterscheidet sich von den Ausführungsformen der Haushaltsgeschirrspülmaschine 1 gemäß den Fig. 1 bis 4 durch eine weitere alternative Ausgestaltung des aktiven Trocknungssystems 15. Bei dieser Ausführungsform der Haushaltsgeschirrspülmaschine 1 umfasst das aktive Trocknungssystem 15 einen Türöffner 26 zum spaltweisen Öffnen der Tür 3.

In einem Trocknungsschritt kann mit Hilfe des Türöffners 26 die Tür 3 einen Spalt weit geöffnet werden. Nach dem spaltweisen Öffnen der Tür 3 entweicht warme feuchte Luft aus dem Spülbehälter 2. Kühle Umgebungsluft strömt von unten in den Spülbehälter 2 durch die geöffnete Tür 3 hinein. Die kühle Umgebungsluft erwärmt sich an dem warmen Spülgut 16 und nimmt Wasser von dem Spülgut 16 auf.

Die zuvor erläuterten Ausführungsformen des aktiven Trocknungssystems 15 lassen sich auch beliebig miteinander kombinieren. So kann beispielsweise die Ausführungsform der Haushaltsgeschirrspülmaschine 1 gemäß den Fig. 1 und 2 mit der Ausführungsform der Haushaltsgeschirrspülmaschine 1 gemäß der Fig. 5 kombiniert werden, so dass das aktive Trocknungssystem 15 neben der Sorptionskolonne 17, dem Lüfter 18 und dem Heizelement 19 auch den Türöffner 26 aufweist.

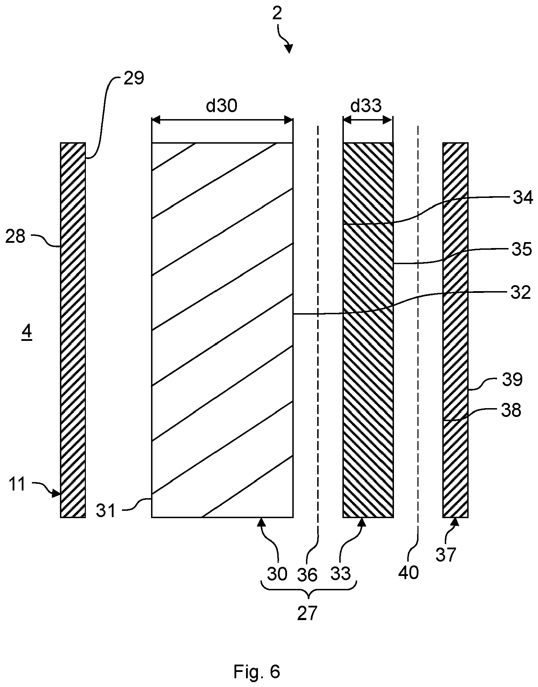

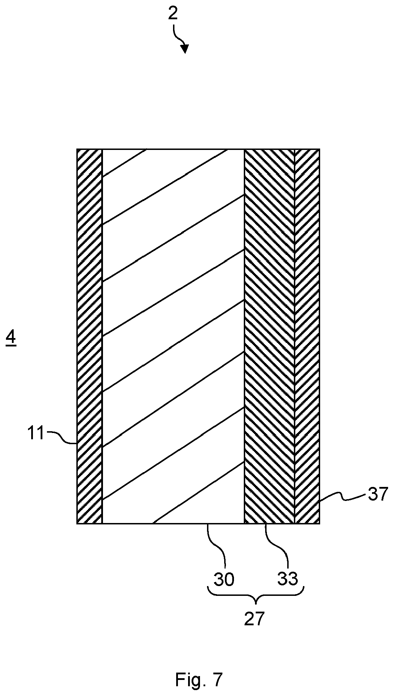

Die Fig. 6 und die Fig. 7 zeigen jeweils eine schematische Teilschnittansicht des Spülbehälters 2. Die Fig. 6 zeigt dabei eine Explosionsansicht. In der Fig. 6 und der Fig. 7 ist jeweils insbesondere nur ein Ausschnitt der Seitenwand 11 des Spülbehälters 2 gezeigt.

Die Haushaltsgeschirrspülmaschine 1 umfasst eine Isolationsanordnung 27 zur thermischen und/oder akustischen Isolation des Spülbehälters 2. Die Isolationsanordnung 27 kann an den Seitenwänden 10, 11, der Rückwand 9, der Decke 8 und/oder der Tür 3 vorgesehen sein. Die Isolationsanordnung 27 kann auch an dem Boden 7 vorgesehen sein. Der Spülbehälter 2 kann somit in der Isolationsanordnung 27 teilweise oder vollständig aufgenommen sein, so dass die Isolationsanordnung 27 den Spülbehälter 2 zumindest teilweise einhüllt oder umhüllt.

Die Isolationsanordnung 27 zur thermischen und/oder akustischen Isolation des Spülbehälters 2 ist außenseitig an dem Spülbehälter 2 vorgesehen. Unter "außenseitig" ist hierbei dem Spülraum 4 abgewandt zu verstehen. Die Seitenwand 11 weist eine dem Spülraum 4 zugewandte Innenseite 28 sowie eine dem Spülraum 4 abgewandte Außenseite 29 auf. An der Außenseite 29 ist die Isolationsanordnung 27 vorgesehen.

Die Isolationsanordnung 27 zur thermischen und/oder akustischen Isolation des Spülbehälters 2 umfasst ein außenseitig an dem Spülbehälter 2 vorgesehenes erstes Isolationselement 30 zur thermischen Isolation des Spülbehälters 2. Das erste Isolationselement 30 kann auch als thermisches Isolationselement bezeichnet werden. Das erste Isolationselement 30 ist vorzugsweise aus einem aufgeschäumten Kunststoffmaterial, insbesondere aus einem aufgeschäumten Polyurethan, gefertigt. Vorzugsweise weist das erste Isolationselement 30 eine offenporige Struktur auf, so dass das erste Isolationselement 30 komprimierbar ist. Das erste Isolationselement 30 umfasst eine der Außenseite 29 der Seitenwand 11 zugewandte erste Oberfläche 31 sowie eine der ersten Oberfläche 31 abgewandte zweite Oberfläche 32. Das erste Isolationselement 30 weist viskoelastische Eigenschaften auf.

Das für das erste Isolationselement 30 zur thermischen Isolation des Spülbehälters 2 verwendete Kunststoffmaterial weist in einem ausgehärteten und/oder vernetzten Zustand adhäsive Eigenschaften auf, so dass das erste Isolationselement 30 mit der dem Spülbehälter 2 zugewandten ersten Oberfläche 31 an dem Spülbehälter 2 anhaftet und zerstörungsfrei von diesem trennbar ist. Das heißt, das erste Isolationselement 30 ist klebstofffrei an dem Spülbehälter 2 befestigt und kann auch rückstandsfrei wieder von diesem entfernt werden. Hierdurch ist das Aufbringen eines Klebstoffs zum Verbinden des ersten Isolationselements 30 mit dem Spülbehälter 2 verzichtbar. Ferner können nach dem Ende der Lebensdauer der Haushaltsgeschirrspülmaschine 1 das erste Isolationselement 30 und der Spülbehälter 2 zur einfachen Wiederverwertung derselben rückstandsfrei voneinander getrennt werden. Bei dem Lösen des ersten Isolationselements 30 von der Seitenwand 11 können auch geringfügige Rückstände des ersten Isolationselements 30 an der Seitenwand 11 verbleiben. Diese Rückstände können jedoch einfach abgerieben werden.

Das erste Isolationselement 30 zur thermischen Isolation des Spülbehälters 2 weist eine Dicke d30 von bevorzugt 5 bis 50 mm, weiter bevorzugt von 10 bis 45 mm, weiter bevorzugt von 15 bis 40 mm, weiter bevorzugt von 20 bis 35 mm, weiter bevorzugt von 25 bis 30 mm, auf. Eine Dichte des ersten Isolationselements 30 beträgt vorzugsweise zwischen 5 und 150 kg/m³, besonders bevorzugt 50 bis 120 kg/m³, weiter bevorzugt 70 bis 100 kg/m³. Eine spezifische Wärmeleitfähigkeit des ersten Isolationselements 30 ist vorzugsweise kleiner als 0,1 W/(m*K), vorzugsweise kleiner als 0,05 W/(m*K). Das erste Isolationselement 30 weist weiterhin vorzugsweise eine spezifische Wärmekapazität von weniger als 2.000 J/(kg*K), bevorzugt von weniger als 1.600 J/(kg*K), weiter bevorzugt von weniger als 1.400 J/(kg*K), auf.

Die Isolationsanordnung 27 zur thermischen und/oder akustischen Isolation des Spülbehälters 2 weist weiterhin ein zweites Isolationselement 33 zur akustischen Isolation des Spülbehälters 2 auf. Das zweite Isolationselement 33 kann auch als akustisches Isolationselement bezeichnet werden. Das zweite Isolationselement 33 dient insbesondere als Masseschicht und verbessert die akustischen Eigenschaften der Isolationsanordnung 27. Das zweite Isolationselement 33 ist auf dem ersten Isolationselement 30 zur thermischen Isolation des Spülbehälters 2 angeordnet, so dass das erste Isolationselement 30 zwischen dem Spülbehälter 2 und dem zweiten Isolationselement 33 angeordnet ist. Das zweite Isolationselement 33 umfasst eine dem ersten Isolationselement 30 zugewandte erste Oberfläche 34 sowie eine der ersten Oberfläche 34 abgewandte zweite Oberfläche 35. Eine Dicke d33 des zweiten Isolationselements 33 ist vorzugsweise geringer als die Dicke d30 des ersten Isolationselements 30. Beispielsweise beträgt die Dicke d33 1 bis 10 mm, bevorzugt 1 bis 8 mm, weiter bevorzugt 1 bis 5 mm, weiter bevorzugt 1 bis 3 mm.

Das erste Isolationselement 30 zur thermischen Isolation des Spülbehälters 2 ist, wie zuvor schon erwähnt, insbesondere auch dazu geeignet, Schwingungen zu dämpfen. Ein Verlustfaktor des Kunststoffmaterials des ersten Isolationselements 30 ist hoch und auf den Einsatz in der Haushaltsgeschirrspülmaschine 1 abgestimmt. Unter einem "Verlustfaktor" ist vorliegend bei physikalischen Schwingungen unterschiedlicher Natur das Verhältnis des verlustbehafteten Imaginärteils zum verlustfreien Realteil einer komplexen Größe zu verstehen. Der Verlustfaktor des Kunststoffmaterials des ersten Isolationselements 30 ist bei 20 °C insbesondere größer als 0,2, bevorzugt größer als 0,4. Weiterhin ist der Hystereseverlust gemäß der IFD-Methode ("Hysteresis Loss - IFD") nach ASTM D3574 bevorzugt größer 15 %, vorzugsweise größer 20 %, insbesondere größer 30 %, und die Erholzeit ("Recovery Time") nach ASTM D3574 ist bevorzugt größer 2 s, vorzugsweise größer 4, insbesondere größer 5 s. Teilweise werden die Schwingungen auch auf das zweite Isolationselement 33 zur akustischen Isolation des Spülbehälters 2 weitergeleitet. Das zweite Isolationselement 33 stellt in dem Verbund der Isolationsanordnung 27 im Wesentlichen eine Flächenmasse durch seine hohe Dichte zur Verfügung.

Insbesondere verhindert das erste Isolationselement 30 zur thermischen Isolation des Spülbehälters 2 eine Wärmeübertragung von dem Spülbehälter 2 auf das zweite Isolationselement 33 zur Isolation des Spülbehälters 2. Hierdurch kann das zweite Isolationselement 33 dem Spülbehälter 2 keine Wärme entziehen. Dadurch wird die Energieeffizienz der Haushaltsgeschirrspülmaschine 1 verbessert. In dem zweiten Isolationselement 33 aber auch in dem ersten Isolationselement 30 werden Schwingungen des Spülbehälters 2 in Wärme umgewandelt.

Das zweite Isolationselement 33 zur akustischen Isolation des Spülbehälters 2 weist vorzugsweise eine deutlich höhere Dichte als das erste Isolationselement 30 zur thermischen Isolation des Spülbehälters 2 auf. Das zweite Isolationselement 33 ist vorzugsweise aus einem Bitumenmaterial, insbesondere aus einem metall- und/oder gesteinsgefüllten Bitumenmaterial, oder aus einem Kunststoffmaterial, insbesondere aus einem metall- und/oder gesteinsgefüllten Kunststoffmaterial, gefertigt. Beispielsweise kann das zweite Isolationselement 33 aus einem Butylmaterial gefertigt sein. Das zweite Isolationselement 33 ist insbesondere platten- oder mattenförmig. Das zweite Isolationselement 33 kann auch ein Metallblech, insbesondere ein Stahlblech, sein.

Das zweite Isolationselement 33 zur akustischen Isolation dient der Entdröhnung des Spülbehälters 2 beziehungsweise der Dämpfung von Schwingungen des Spülbehälters 2. Das zweite Isolationselement 33 weist vorzugsweise einen möglichst hohen Verlustfaktor auf. Der Verlustfaktor des Materials des zweiten Isolationselements 33 ist bei 20 °C vorzugsweise größer als 0,08, weiter bevorzugt größer als 0,15. Eine Dichte des zweiten Isolationselements 33 ist vorzugsweise größer als 1.000 kg/m³.

Das zweite Isolationselement 33 zur akustischen Isolation des Spülbehälters 2 ist derart mit dem ersten Isolationselement 30 zur thermischen Isolation des Spülbehälters 2 verbunden, dass sich das zweite Isolationselement 33 und das erste Isolationselement 30 zerstörungsfrei und rückstandsfrei voneinander trennen lassen. Hierdurch ist eine Wiederverwertung der Materialien des ersten Isolationselements 30 und des zweiten Isolationselements 33 einfach möglich. Beispielsweise kann das erste Isolationselement 30 aufgrund der adhäsiven Eigenschaften seiner zweiten Oberfläche 32 mit der ersten Oberfläche 34 des zweiten Isolationselements 33 verbunden werden. Optional kann zwischen dem ersten Isolationselement 30 und dem zweiten Isolationselement 33 eine Trennschicht 36 angeordnet sein. Die Trennschicht 36 kann Teil der Isolationsanordnung 27 sein. Die Trennschicht 36 kann beispielsweise eine Wachsschicht, eine Folienschicht oder mehrere übereinandergelegte Folien sein. Das zweite Isolationselement 33 kann jedoch auch unlösbar mit dem ersten Isolationselement 30 verbunden sein.

Außenseitig an dem zweiten Isolationselement 33 zur akustischen Isolation kann eine Außenverkleidung 37 vorgesehen sein. Die Außenverkleidung 37 kann eine dem zweiten Isolationselement 33 zugewandte erste Oberfläche 38 sowie eine der ersten Oberfläche 38 abgewandte zweite Oberfläche 39 umfassen. Die Außenverkleidung 37 kann Teil eines Gehäuses der Haushaltsgeschirrspülmaschine 1 sein. Die Außenverkleidung 37 kann beispielsweise ein Stahlblech sein. Die Außenverkleidung 37 kann entweder lose auf dem zweiten Isolationselement 33 aufliegen oder lösbar mit diesem verbunden sein. Hierzu kann zwischen dem zweiten Isolationselement 33 und der Außenverkleidung 37 eine optionale Trennschicht 40 vorgesehen sein. Die Trennschicht 40 kann identisch wie die Trennschicht 36 aufgebaut sein.

Die Kombination der Isolationsanordnung 27 zur thermischen und/oder akustischen Isolation des Spülbehälters 2 mit einem wie zuvor erläuterten aktiven Trocknungssystem 15 ermöglicht das Ausschöpfen des vollen Energiesparpotenzials der Haushaltsgeschirrspülmaschine 1. Der Einsatz der Isolationsanordnung 27 in Kombination mit einem aktiven Trocknungssystem 15 ist insbesondere bei Haushaltsgeschirrspülmaschinen 1 mit einem Energieverbrauch von kleiner als 1,2 kWh/Betriebszyklus, insbesondere von kleiner als 1,0 kWh/Betriebszyklus, insbesondere von kleiner als 0,8 kWh/Betriebszyklus, insbesondere von kleiner als 0,7 kWh/Betriebszyklus oder auch insbesondere von kleiner als 0,6 kWh/Betriebszyklus vorteilhaft.

Durch den Aufbau der Isolationsanordnung 27 zur thermischen und/oder akustischen Isolation des Spülbehälters 2 mit dem zwischen dem Spülbehälter 2 und dem zweiten Isolationselement 33 zur akustischen Isolation des Spülbehälters 2 angeordneten ersten Isolationselement 30 zur thermischen Isolation des Spülbehälters 2 kann der Transfer von Wärme in das zweite Isolationselement 33 deutlich reduziert werden. Hierdurch reduziert sich der Energieverbrauch der Haushaltsgeschirrspülmaschine 1. Die maximale Wirksamkeit des aktiven Trocknungssystems 15 kann ausgenutzt werden. Das erste Isolationselement 30 kann den Spülbehälter 2 außenseitig vollständig einschließen. Bei Verwendung eines Warmwasseranschlusses kann die Wärme des zugeführten Wassers länger in dem Spülbehälter 2 gehalten werden. Durch die verbesserte thermische Isolation des Spülbehälters 2 kühlt der Spülbehälter 2 langsamer aus. Dadurch bleibt die Temperatur während des Spülvorgangs länger hoch und verbessert die Spülleistung. Die Wirksamkeit der verbesserten thermischen Isolation kann in allen Programmen erreicht werden. Es kann eine Energieeinsparung für die Durchführung eines kompletten Spülprogramms erzielt werden. Es kann auch eine Energieeinsparung in der Aufheizphase erreicht werden. Es erfolgt ferner ein höherer Energietransfer in nachfolgenden Heizbädern.

Obwohl die vorliegende Erfindung anhand von Ausführungsbeispielen beschrieben wurde, ist sie vielfältig modifizierbar.

### Verwendete Bezugszeichen

- 1: Haushaltsgerät; Haushaltsgeschirrspülmaschine
- 2: Funktionsbehälter; Spülbehälter
- 3: Tür
- 4: Spülraum
- 5: Schwenkachse
- 6: Beschickungsöffnung
- 7: Boden
- 8: Decke
- 9: Rückwand
- 10: Seitenwand
- 11: Seitenwand
- 12: Spülgutaufnahme; untere Spülgutaufnahme; Unterkorb
- 13: Spülgutaufnahme; obere Spülgutaufnahme; Oberkorb
- 14: Spülgutaufnahme; Besteckschublade
- 15: Aktives Trocknungssystem
- 16: Gut; Spülgut
- 17: Sorptionskolonne
- 18: Lüfter
- 19: Heizelement
- 20: Wasserabsorbierendes Material
- 21: Auslassöffnung
- 22: Leitung
- 23: Einlassöffnung
- 24: Leitung
- 25: Kondensationsbehälter
- 26: Türöffner
- 27: Isolationsanordnung zur thermischen und/oder akustischen Isolation des Spülbehälters
- 28: Innenseite
- 29: Außenseite
- 30: Erstes Isolationselement zur thermischen Isolation des Spülbehälters
- 31: Oberfläche
- 32: Oberfläche
- 33: Zweites Isolationselement zur akustischen Isolation des Spülbehälters
- 34: Oberfläche
- 35: Oberfläche
- 36: Trennschicht
- 37: Außenverkleidung
- 38: Oberfläche
- 39: Oberfläche
- 40: Trennschicht

- A: Auszugsrichtung (Pfeil)
- d30: Dicke
- d33: Dicke
- E: Einschubrichtung (Pfeil)
- L1: Umgebungsluft (Pfeil)
- L2: Abluft (Pfeil)

## Patentansprüche

1. Haushaltsgerät (1), insbesondere Haushaltsgeschirrspülmaschine, mit einem Funktionsbehälter (2), insbesondere Spülbehälter, einer außenseitig an dem Funktionsbehälter (2), insbesondere Spülbehälter, vorgesehenen Isolationsanordnung (27) zur thermischen und akustischen Isolation des Funktionsbehälters (2), insbesondere Spülbehälters, und mit einem aktiven Trocknungssystem (15) zur aktiven Trocknung von in dem Funktionsbehälter (2), insbesondere Spülbehälter, aufgenommenen Gut (16), insbesondere Spülgut,
- wobei die Isolationsanordnung (27) zur thermischen und akustischen Isolation des Funktionsbehälters (2), insbesondere Spülbehälters, ein erstes Isolationselement (30) zur thermischen Isolation des Funktionsbehälters (2), insbesondere Spülbehälters, aufweist,
- wobei das erste Isolationselement (30) zur thermischen Isolation des Funktionsbehälters (2), insbesondere Spülbehälters, materialeinstückig aus einem Kunststoffmaterial gefertigt ist, welches in einem ausgehärteten und/oder vernetzten Zustand adhäsive Eigenschaften aufweist, so dass das erste Isolationselement (30) zur thermischen Isolation des Funktionsbehälters (2), insbesondere Spülbehälters, mit einer dem Funktionsbehälter (2), insbesondere Spülbehälter, zugewandten Oberfläche (31) an dem Funktionsbehälter (2), insbesondere Spülbehälter, anhaftet,
- wobei die Isolationsanordnung (27) ein zweites Isolationselement (33) zur akustischen Isolation des Funktionsbehälters (2), insbesondere Spülbehälters, aufweist,
- wobei das erste Isolationselement (30) zur thermischen Isolation des Funktionsbehälters (2), insbesondere Spülbehälters, zwischen dem Funktionsbehälter (2), insbesondere Spülbehälter, und dem zweiten Isolationselement (33) zur akustischen Isolation des Funktionsbehälters (2), insbesondere Spülbehälters, angeordnet ist und
- wobei das erste Isolationselement (30) zur thermischen Isolation des Funktionsbehälters (2), insbesondere Spülbehälters, eine Wärmeübertragung von dem Funktionsbehälter (2), insbesondere Spülbehälter, auf das zweite Isolationselement (33) zur akustischen Isolation des Funktionsbehälters (2), insbesondere Spülbehälters, verhindert,
**dadurch gekennzeichnet,**
- **dass** das erste mit der dem Funktionsbehälter (2), insbesondere Spülbehälter, zugewandten Oberfläche (31) an dem Funktionsbehälter (2), insbesondere Spülbehälter, anhaftende Isolationselement (30) zur thermischen Isolation des Funktionsbehälters (2), insbesondere Spülbehälters, zerstörungsfrei von dem Funktionsbehälter (2), insbesondere Spülbehälter, trennbar ist und
- **dass** das erste Isolationselement (30) zur thermischen Isolation des Funktionsbehälters (2), insbesondere Spülbehälters, klebstofffrei an dem Funktionsbehälter (2), insbesondere Spülbehälter, befestigt ist und auch rückstandsfrei wieder von dem Funktionsbehälter (2), insbesondere Spülbehälter, entfernt werden kann.

2. Haushaltsgerät (1) nach Anspruch 1, **dadurch gekennzeichnet, dass** das Kunststoffmaterial ein Polyurethan, insbesondere ein aufgeschäumtes Polyurethan, ist.

3. Haushaltsgerät (1) nach Anspruch 1 oder 2, **dadurch gekennzeichnet, dass** das Kunststoffmaterial viskoelastische Eigenschaften aufweist.

4. Haushaltsgerät (1) nach Anspruch 1, 2 oder 3, **dadurch gekennzeichnet, dass** das Haushaltsgerät (1) einen Energieverbrauch von kleiner als 1,2 kWh/Betriebszyklus, bevorzugt von kleiner als 1,0 kWh/Betriebszyklus, weiter bevorzugt von kleiner als 0,8 kWh/Betriebszyklus, weiter bevorzugt von kleiner als 0,7 kWh/Betriebszyklus, weiter bevorzugt von kleiner als 0,6 kWh/Betriebszyklus, aufweist.

5. Haushaltsgerät (1) nach einem der vorhergehenden Ansprüche, **dadurch gekennzeichnet, dass** das aktive Trocknungssystem (15) ein wasserabsorbierendes Material (20), insbesondere Zeolith, zum Absorbieren von Feuchtigkeit in dem Funktionsbehälter (2), insbesondere Spülbehälter, einen Lüfter (18) zum Belüften des Funktionsbehälters (2), insbesondere Spülbehälters, und/oder einen Türöffner (26) zum Öffnen einer Tür (3) des Funktionsbehälters (2), insbesondere Spülbehälters, aufweist.

6. Haushaltsgerät (1) nach einem der vorhergehenden Ansprüche, **dadurch gekennzeichnet, dass** das zweite Isolationselement (33) zur akustischen Isolation des Funktionsbehälters (2), insbesondere Spülbehälters, eine höhere Dichte als das erste Isolationselement (30) zur thermischen Isolation des Funktionsbehälters (2), insbesondere Spülbehälters, aufweist.

7. Haushaltsgerät (1) nach einem der vorhergehenden Ansprüche, **dadurch gekennzeichnet, dass** das zweite Isolationselement (33) zur akustischen Isolation des Funktionsbehälters (2), insbesondere Spülbehälters, aus einem Bitumenmaterial, insbesondere aus einem metall- und/oder gesteinsgefüllten Bitumenmaterial, oder aus einem Kunststoffmaterial, insbesondere aus einem metall- und/oder gesteinsgefüllten Kunststoffmaterial, gefertigt ist.

8. Haushaltsgerät (1) nach einem der vorhergehenden Ansprüche, **dadurch gekennzeichnet, dass** zwischen dem ersten Isolationselement (30) zur thermischen Isolation des Funktionsbehälters (2), insbesondere Spülbehälters, und dem zweiten Isolationselement (33) zur akustischen Isolation des Funktionsbehälters (2), insbesondere Spülbehälters, eine Trennschicht (36) angeordnet ist, um das erste Isolationselement (30) zur thermischen Isolation des Funktionsbehälters (2), insbesondere Spülbehälters, zerstörungsfrei von dem zweiten Isolationselement (33) zur akustischen Isolation des Funktionsbehälters (2), insbesondere Spülbehälters, zu trennen.

## Claims

1. Household appliance (1), in particular a household dishwasher, with a functional compartment (2), in particular a washing compartment, an insulation arrangement (27) provided externally on the functional compartment (2), in particular the washing compartment, for thermal and acoustic insulation of the functional compartment (2), in particular the washing compartment, and an active drying system (15) for active drying of items (16), in particular items for washing, received in the functional compartment (2), in particular the washing compartment,
- wherein the insulation arrangement (27) for thermal and acoustic insulation of the functional compartment (2), in particular the washing compartment, has a first insulation element (30) for thermal insulation of the functional compartment (2), in particular the washing compartment,
- wherein the first insulation element (30) for thermal insulation of the functional compartment (2), in particular the washing compartment, is made as a single piece from a plastic material, which in a cured and/or crosslinked state has adhesive properties, so the first insulation element (30) for thermal insulation of the functional compartment (2), in particular the washing compartment, adheres to a surface (31) facing the functional compartment (2), in particular the washing compartment, on the functional compartment (2), in particular the washing compartment,
- wherein the insulation arrangement (27) has a second insulation element (33) for acoustic insulation of the functional compartment (2), in particular the washing compartment,
- wherein the first insulation element (30) for thermal insulation of the functional compartment (2), in particular the washing compartment, is arranged between the functional compartment (2), in particular the washing compartment, and the second insulation element (33) for acoustic insulation of the functional compartment (2), in particular the washing compartment, and
- wherein the first insulation element (30) for thermal insulation of the functional compartment (2), in particular the washing compartment, prevents heat transfer from the functional compartment (2), in particular the washing compartment, to the second insulation element (33) for acoustic insulation of the functional compartment (2), in particular the washing compartment,
**characterised in that**
- the first insulation element (30) for thermal insulation of the functional compartment (2), in particular the washing compartment, adhering to the surface (31) facing the functional compartment (2), in particular the washing compartment, on the functional compartment (2), in particular the washing compartment, can be detached from the functional compartment (2), in particular the washing compartment, non-destructively and
- the first insulation element (30) for thermal insulation of the functional compartment (2), in particular the washing compartment, is fastened without adhesive to the functional compartment (2), in particular the washing compartment, and can also be removed again from the functional compartment (2), in particular the washing compartment, without residues.

2. Household appliance (1) according to claim 1, **characterised in that** the plastic material is a polyurethane, in particular a foamed polyurethane.

3. Household appliance (1) according to claim 1 or 2, **characterised in that** the plastic material has viscoelastic properties.

4. Household appliance (1) according to claim 1, 2 or 3, **characterised in that** the household appliance (1) has an energy consumption of less than 1.2 kWh/operating cycle, preferably of less than 1.0 kWh/operating cycle, more preferably of less than 0.8 kWh/operating cycle, more preferably of less than 0.7 kWh/operating cycle, more preferably of less than 0.6 kWh/operating cycle.

5. Household appliance (1) according to one of the preceding claims, **characterised in that** the active drying system (15) has a water-absorbent material (20), in particular zeolite, for absorbing moisture in the functional compartment (2), in particular the washing compartment, a fan (18) for ventilating the functional compartment (2), in particular the washing compartment, and/or a door opener (26) for opening a door (3) of the functional compartment (2), in particular the washing compartment.

6. Household appliance (1) according to one of the preceding claims, **characterised in that** the second insulation element (33) for acoustic insulation of the functional compartment (2), in particular the washing compartment, has a higher density than the first insulation element (30) for thermal insulation of the functional compartment (2), in particular the washing compartment.

7. Household appliance (1) according to one of the preceding claims, **characterised in that** the second insulation element (33) for acoustic insulation of the functional compartment (2), in particular the washing compartment, is made from a bitumen material, in particular from a metal- and/or stone-filled bitumen material or from a plastic material, in particular from a metal- and/or stone-filled plastic material.

8. Household appliance (1) according to one of the preceding claims, **characterised in that** a separation layer (36) is arranged between the first insulation element (30) for thermal insulation of the functional compartment (2), in particular the washing compartment, and the second insulation element (33) for acoustic insulation of the functional compartment (2), in particular the washing compartment, in order to non-destructively separate the first insulation element (30) for thermal insulation of the functional compartment (2), in particular the washing compartment, from the second insulation element (33) for acoustic insulation of the functional compartment (2), in particular the washing compartment.

## Revendications

1. Appareil ménager (1), en particulier lave-vaisselle ménager, comprenant un récipient fonctionnel (2), en particulier un récipient de lavage, un agencement d'isolation (27) pour une isolation thermique et acoustique du récipient fonctionnel (2), en particulier du récipient de lavage agencé sur le côté extérieur du récipient fonctionnel (2), en particulier du récipient de lavage, et un système de séchage actif (15) pour un séchage actif d'articles (16), en particulier d'articles à laver reçus dans le récipient fonctionnel (2), en particulier le récipient de lavage,
- dans lequel l'agencement d'isolation (27) pour une isolation thermique et acoustique du récipient fonctionnel (2), en particulier du récipient de lavage, présente un premier élément d'isolation (30) pour une isolation thermique du récipient fonctionnel (2), en particulier du récipient de lavage,
- dans lequel le premier élément d'isolation (30) pour une isolation thermique du récipient fonctionnel (2), en particulier du récipient de lavage, est fabriqué d'un seul tenant en une matière plastique qui présente, dans un état durci et/ou réticulé, des propriétés adhésives, de telle manière que le premier élément d'isolation (30) pour une isolation thermique du récipient fonctionnel (2), en particulier du récipient de lavage, adhère, avec une surface (31) tournée vers le récipient fonctionnel (2), en particulier vers le récipient de lavage, au récipient fonctionnel (2), en particulier au récipient de lavage,
- dans lequel l'agencement d'isolation (27) présente un deuxième élément d'isolation (33) pour une isolation acoustique du récipient fonctionnel (2), en particulier du récipient de lavage,
- dans lequel le premier élément d'isolation (30) pour une isolation thermique du récipient fonctionnel (2), en particulier du récipient de lavage, est disposé entre le récipient fonctionnel (2), en particulier le récipient de lavage et le deuxième élément d'isolation (33) pour une isolation acoustique du récipient fonctionnel (2), en particulier du récipient de lavage,
- dans lequel le premier élément d'isolation (30) pour une isolation thermique du récipient fonctionnel (2), en particulier du récipient de lavage, empêche une transmission de chaleur du récipient fonctionnel (2), en particulier du récipient de lavage sur le deuxième élément d'isolation (33) pour une isolation acoustique du récipient fonctionnel (2), en particulier du récipient de lavage,
**caractérisé en ce que** :
- le premier élément d'isolation (30) pour une isolation thermique du récipient fonctionnel (2), en particulier du récipient de lavage, adhérant, avec la surface (31) tournée vers le récipient fonctionnel (2), en particulier vers le récipient de lavage, au récipient fonctionnel (2), en particulier au récipient de lavage, peut être séparé de façon non destructive du récipient fonctionnel (2), en particulier du récipient de lavage, et
- le premier élément d'isolation (30) pour une isolation thermique du récipient fonctionnel (2), en particulier du récipient de lavage est fixé sans adhésif au récipient fonctionnel (2), en particulier au récipient de lavage, et peut être également à nouveau enlevé sans résidu du récipient fonctionnel (2), en particulier du récipient de lavage.

2. Appareil ménager (1) selon la revendication 1, **caractérisé en ce que** la matière plastique est un polyuréthane, en particulier un polyuréthane expansé.

3. Appareil ménager (1) selon la revendication 1 ou 2, **caractérisé en ce que** la matière plastique présente des propriétés viscoélastiques.

4. Appareil ménager (1) selon la revendication 1, 2 ou 3, **caractérisé en ce que** l'appareil ménager (1) présente une consommation d'énergie inférieure à 1,2 kWh/cycle de fonctionnement, de préférence inférieure à 1,0 kWh/cycle de fonctionnement, de manière plus préférée inférieure à 0,8 kWh/cycle de fonctionnement, de manière davantage préférée de 0,7 kWh/cycle de fonctionnement, et plus préférablement inférieure à 0,6 kWh/cycle de fonctionnement.

5. Appareil ménager (1) selon l'une des revendications précédentes, **caractérisé en ce que** le système de séchage (15) actif présente un matériau absorbant l'eau (20), en particulier une zéolite, pour absorber l'humidité dans le récipient fonctionnel (2), en particulier dans le récipient de lavage, un ventilateur (18) pour aérer le récipient fonctionnel (2), en particulier le récipient de lavage, et/ou un ouvre-porte (26) pour ouvrir une porte (3) du récipient fonctionnel (2), en particulier du récipient de lavage.

6. Appareil ménager (1) selon l'une des revendications précédentes, **caractérisé en ce que** le deuxième élément d'isolation (33) pour une isolation acoustique du récipient fonctionnel (2), en particulier du récipient de lavage, a une densité plus élevée que le premier élément d'isolation (30) pour une isolation thermique du récipient fonctionnel (2), en particulier du récipient de lavage.

7. Appareil ménager (1) selon l'une des revendications précédentes, **caractérisé en ce que** le deuxième élément d'isolation (33) pour une isolation acoustique du récipient fonctionnel (2), en particulier du récipient de lavage, est fabriqué en un matériau bitumineux, en particulier en un matériau bitumineux rempli de métal et/ou de roche, ou en un matériau plastique, en particulier en un matériau plastique rempli de métal et/ou de roche.

8. Appareil ménager (1) selon l'une des revendications précédentes, **caractérisé en ce qu'**une couche de séparation (36) est disposée entre le premier élément d'isolation (30) pour une isolation thermique du récipient fonctionnel (2), en particulier du récipient de lavage, et le deuxième élément d'isolation (33) pour une isolation acoustique du récipient fonctionnel (2), en particulier du récipient de lavage, afin de séparer de manière non destructive le premier élément d'isolation (30) pour une isolation thermique du récipient fonctionnel (2), en particulier du récipient de lavage vis-à-vis du deuxième élément d'isolation (33) pour une isolation acoustique du récipient fonctionnel (2), en particulier du récipient de lavage.
